# EUROPEAN PATENT APPLICATION

(11) **EP 4 823 210 A1**
(43) Date of publication of application: **14.10.2026**
(21) Application number: 23960704.7
(22) Date of filing: 04.12.2023
(51) Int. Cl.: H04W 72/23, H04W 8/22, H04W 56/00

(54) **TERMINAL, WIRELESS COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP); YOU, Luhua, Beijing 100190 (CN); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/043256
(87) International publication number: WO 2025/120686

(57) **Abstract**

A terminal according to one aspect of the present disclosure includes: a receiving section that receives one or more repetitions among a plurality of repetitions of a synchronization signal block; and a control section that determines at least one of a repetition index and a synchronization signal block index based on the one or more repetitions.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

In future radio communication systems, coverage enhancement is being considered.

However, coverage enhancement of a synchronization signal block (SSB, SS/PBCH block) has not been sufficiently studied. When such studies are insufficient, there is a concern that communication quality/communication throughput may deteriorate.

Therefore, an object of the present disclosure is to provide a terminal, a radio communication method, and a base station capable of appropriately processing a synchronization signal block.

### Solution to Problem

A terminal according to one aspect of the present disclosure includes: a receiving section that receives one or more repetitions among a plurality of repetitions of a synchronization signal block; and a control section that determines at least one of a repetition index and a synchronization signal block index based on the one or more repetitions.

### Advantageous Effects of Invention

According to one aspect of the present disclosure, a synchronization signal block can be appropriately processed.

### Brief Description of Drawings

[FIG. 1] FIG. 1 illustrates an example of positions of candidate SSBs in Option 1 of Embodiment 1-1.
[FIG. 2] FIG. 2 illustrates an example of positions of candidate SSBs in Option 1a of Embodiment 1-1.
[FIG. 3] FIG. 3 illustrates an example of positions of candidate SSBs in Option 2 of Embodiment 1-1.
[FIG. 4] FIG. 4 illustrates an example of positions of candidate SSBs in Alternative 1 of Embodiment 1-2.
[FIG. 5] FIG. 5 illustrates an example of positions of candidate SSBs in Alternative 2 of Embodiment 1-2.
[FIG. 6] FIG. 6 illustrates an example of positions of candidate SSBs in Alternative 3 of Embodiment 1-2.
[FIG. 7] FIG. 7 illustrates an example of a repetition periodicity in Embodiment 1-3.
[FIG. 8] FIG. 8 illustrates an example of a detection periodicity in Embodiment 1-3.
[FIG. 9] FIG. 9 illustrates an example of Alternative 1 for the association between candidate SSBs and SSB indices in Embodiment 1-4.
[FIG. 10] FIG. 10 illustrates an example of Alternative 2 for the association between candidate SSBs and SSB indices in Embodiment 1-4.
[FIG. 11] FIG. 11 is a diagram illustrating an example of a schematic configuration of a radio communication system according to one embodiment.
[FIG. 12] FIG. 12 is a diagram illustrating an example of a configuration of a base station according to one embodiment.
[FIG. 13] FIG. 13 is a diagram illustrating an example of a configuration of a user terminal according to one embodiment.
[FIG. 14] FIG. 14 is a diagram illustrating an example of a hardware configuration of the base station and the user terminal according to one embodiment.
[FIG. 15] FIG. 15 is a diagram illustrating an example of a vehicle according to one embodiment.

### Description of Embodiments

### <Initial Access Procedure>

In an initial access procedure, a UE (RRC_IDLE mode) performs reception of a SS/PBCH block (SSB), transmission of Msg.1 (PRACH/random access preamble/preamble), reception of Msg.2 (PDCCH, PDSCH including a random access response (RAR)), transmission of Msg.3 (PUSCH scheduled by a RAR UL grant), and reception of Msg.4 (PDCCH, PDSCH including a UE contention resolution identity). Next, when an ACK for Msg.4 is transmitted from the UE to a base station (network), an RRC connection is established (RRC_CONNECTED mode).

The reception of an SSB includes PSS detection, SSS detection, PBCH-DMRS detection, and PBCH reception. In the PSS detection, detection of a part of a physical cell ID (PCI), detection (synchronization) of an OFDM symbol timing, and (coarse) frequency synchronization are performed. The SSS detection includes detection of the physical cell ID. The PBCH-DMRS detection includes detection of (a part of) an SSB index in a half-radio frame (5 ms). The PBCH reception includes detection of a system frame number (SFN) and a radio frame timing (SSB index), reception of configuration information for receiving remaining minimum system information (RMSI, SIB1), and recognition of whether the UE can camp on the cell (carrier).

The SSB has a bandwidth of 20 RBs and a duration of 4 symbols. A transmission periodicity of the SSB can be configured from {5, 10, 20, 40, 80, 160} ms. In a half-frame, a plurality of symbol positions of the SSB are defined based on a frequency range (FR1, FR2).

The PBCH has a payload of 56 bits. N repetitions of the PBCH are transmitted within a periodicity of 80 ms. N depends on the SSB transmission periodicity.

System information consists of a MIB carried by the PBCH, RMSI (SIB1), and other system information (OSI). The SIB1 includes information for performing a RACH configuration and a RACH procedure. A time/frequency resource relationship between the SSB and a PDCCH monitoring resource for SIB1 is configured by the PBCH.

A PDSCH carrying SIB1 (SIB1 PDSCH) is periodically transmitted. The PDSCH is scheduled by a type 0-PDCCH. One SSB corresponds to one SIB1 PDSCH. One SIB1 PDSCH may be repeated twice or may not be repeated. The SIB1 configures a public land mobile network (PLMN) ID. The PLMN ID may be an MNO (Mobile Network Operator) identifier.

A base station using beam correspondence transmits a plurality of SSBs for each SSB transmission periodicity using a plurality of beams (analog beams), respectively. The plurality of SSBs may be referred to as an SSB burst. The plurality of SSBs have a plurality of SSB indices, respectively. A UE that detects one SSB transmits a PRACH in a RACH occasion associated with the SSB index, and receives a RAR in a RAR window.

### (PRACH Configuration)

The common RACH configuration (RACH-ConfigCommon) may include a generic RACH configuration (rach-ConfigGeneric), a total number of RA preambles (totalNumberOfRA-Preambles), and SSBs per RACH occasion and contention-based (CB) preambles per SSB (ssb-perRACH-OccasionAndCB-PreamblesPerSSB). The rach-ConfigGeneric may include a PRACH configuration index (prach-ConfigurationIndex) and a message 1 FDM (msg1-FDM, the number of PRACH occasions FDMed within one time instance). The ssb-perRACH-OccasionAndCB-PreamblesPerSSB may include the number of CB preambles per SSB for a case where the number of SSBs per RACH occasion is 1/8 (oneEighth, which means that one SSB is associated with eight RACH occasions).

The UE may apply a number N of SS/PBCH blocks associated with one PRACH occasion and a number R of CB preambles per valid PRACH occasion per SS/PBCH block to a type 1 random access procedure (4-step random access procedure, messages 1/2/3/4) using the ssb-perRACH-OccasionAndCB-PreamblesPerSSB.

For the type 1 random access procedure, or for a type 2 random access procedure with a configuration of PRACH occasions independent of the type 1 random access procedure (2-step random access procedure, messages A/B), if N < 1, one SS/PBCH block is mapped to 1/N consecutive valid RACH occasions, and R CB preambles with consecutive indices associated with a SS/PBCH block index per valid PRACH occasion start from preamble index 0. If N >= 1, R CB preambles with consecutive indices associated with an SS/PBCH block index n (0 <= n < -N-1) per valid PRACH occasion start from preamble index n·N_preamble^total/N. Here, the N_preamble^total is given by the totalNumberOfRA-Preambles for the type 1 random access procedure, and is given by msgA-TotalNumberOfRA-Preambles for the type 2 random access procedure with the configuration of PRACH occasions independent of the type 1 random access procedure. The N_preamble^total is a multiple of N.

An association period, starting from frame 0 for mapping the SS/PBCH block to the PRACH occasion, is a minimum value within a set that is determined by a PRACH configuration period in accordance with a relationship (a relationship defined in the specifications) between the PRACH configuration period and the association period such that N_{Tx}^{SSB} SS/PBCH block indices are mapped to at least one PRACH occasion within the association period. Here, the UE obtains N_{Tx}^{SSB} from the value of an in-burst SSB position (ssb-PositionsInBurst) in the SIB1 or in a common serving cell configuration (ServingCellConfigCommon). When there is a set of PRACH occasions or PRACH preambles that is not mapped to N_{Tx}^{SSB} SS/PBCH block indices after an integer number of mapping cycles from the SS/PBCH block indices to the PRACH occasions within the association period, no SS/PBCH block index is mapped to the set of PRACH occasions or PRACH preambles. An association pattern period includes one or more association periods, and is determined such that a pattern between the PRACH occasions and the SS/PBCH block indices repeats at most every 160 ms. If there is a PRACH occasion not associated with an SS/PBCH block index after an integer number of association periods, this PRACH occasion is not used for a PRACH.

In the case of a PRACH transmission triggered by a higher layer (a PRACH transmission not triggered by a PDCCH order), if ssb-ResourceList is provided, a PRACH mask index is indicated by ra-ssb-OccasionMaskIndex. This ra-ssb-OccasionMaskIndex indicates a PRACH occasion for a PRACH transmission where the PRACH occasion is associated with the selected SS/PBCH block index.

The PRACH occasions are consecutively mapped for each corresponding SS/PBCH block index. The indexing of the PRACH occasions indicated by the mask index value is reset for each SS/PBCH block index and for each mapping cycle of consecutive PRACH occasions. In the first available mapping cycle, the UE selects a PRACH occasion indicated by the PRACH mask index value for the indicated SS/PBCH block index for PRACH transmission.

The order of PRACH occasions for the indicated preamble index is as follows.
·First, the increasing order of frequency resource indices for frequency-multiplexed PRACH occasions
·Second, the increasing order of time resource indices for time-multiplexed PRACH occasions in a PRACH slot.
·Third, the ascending order of indices of PRACH slots.

For a PRACH transmission triggered in response to a request from a higher layer, if csirs-ResourceList is provided, the value of ra-OccasionList indicates a list of PRACH occasions of PRACH transmission, and each PRACH occasion is associated with a selected CSI-RS index indicated by csi-RS. The indexing of PRACH occasions indicated by ra-OccasionList is reset for each association pattern period.

For PRACH configuration periods of 10, 20, 40, 80, and 160 [msec], association periods are {1,2,4,8,16}, {1,2,4,8}, {1,2,4}, {1,2}, and {1}, respectively.

The PRACH mask index value (msgA-SSB-SharedRO-MaskIndex) is associated with an allowed PRACH occasion (a value of a PRACH occasion index) for an SSB.

In an example (Mapping 1) of association of PRACH occasions (RACH occasions (ROs)) and beams (SSB/CSI-RS) based on the higher layer parameter ssb-perRACH-OccasionAndCB-PreamblesPerSSB, when the ssb-perRACH-OccasionAndCB-PreamblesPerSSB indicates oneHalf,n16 (N = 1/2, R = 16) and msg1-FDM is 4, four ROs are FDMed within one time instance, and one SSB is mapped to two ROs. Preamble indices 0 to 15 are associated with two ROs, and the preamble indices 0 to 15 are associated with SSB0. This way, when N < 1, one SSB is mapped to a plurality of ROs. As a result, the RO capacity for each beam is increased.

In another example (Mapping 2) of association of ROs and beams based on the higher layer parameter ssb-perRACH-OccasionAndCB-PreamblesPerSSB, when the ssb-perRACH-OccasionAndCB-PreamblesPerSSB indicates n4,n16 (N = 4, R = 16), msg1-FDM is 4, and N_preamble^total is 64, four ROs are FDMed to one time instance, and four SSBs are mapped to one RO. SSBs #0 to #3 are associated with one RO. Preamble indices #0 to #15 are associated with SSB #0, preamble indices #16 to #31 are associated with SSB #1, preamble indices #32 to #47 are associated with SSB #2, and preamble indices #48 to #63 are associated with SSB #3. In this way, the same RO is associated with different SS/PBCH block indices, and different preambles are used for different SS/PBCH block indices. The base station can distinguish between the associated SS/PBCH block indices based on the received PRACH.

The random access preamble can be transmitted only in time resources defined in the random access configuration of the specifications, and depends on whether the frequency range is FR1 or FR2 and the spectrum type (paired spectrum/supplementary uplink (SUL)/unpaired spectrum). The PRACH configuration index is given by the higher layer parameter prach-ConfigurationIndex or, if configured, is given by msgA-PRACH-ConfigurationIndex. In the specifications, each value of the PRACH configuration index is associated with at least one of a preamble format, x and y in n_f(frame number) mod x = y, a subframe number, a starting symbol, the number of PRACH slots in a subframe, the number N_t^RA,slot of time-domain PRACH occasions in a PRACH slot, and a PRACH duration N_dur^RA.

### (SSB:Physical channels and modulation/Downlink/Physical signals/SS/PBCH block)

Resources in an SS/PBCH block (SSB) for PSS, SSS, PBCH, and DMRS for PBCH are defined as follows.
- PSS:
   -- OFDM symbol number l = 0 relative to the start of an SS/PBCH block, and subcarrier number k = 56, 57,..., 182 relative to the start of an SS/PBCH block.
- SSS:
   -- OFDM symbol number l = 2 relative to the start of an SS/PBCH block, and subcarrier number k = 56, 57,..., 182 relative to the start of an SS/PBCH block.
- Resources set to zero:
   -- OFDM symbol number l = 0 relative to the start of an SS/PBCH block, and subcarrier number k = 0, 1,..., 55, 183, 184,..., 239 relative to the start of an SS/PBCH block.
   -- OFDM symbol number l = 2 relative to the start of an SS/PBCH block, and subcarrier number k = 48, 49,..., 55, 183, 184,..., 191 relative to the start of an SS/PBCH block.
- PBCH:
   -- OFDM symbol number l = 1, 3 relative to the start of an SS/PBCH block, and subcarrier number k = 0, 1,..., 239 relative to the start of an SS/PBCH block.
   -- OFDM symbol number l = 2 relative to the start of an SS/PBCH block, and subcarrier number k = 0, 1,..., 47, 192, 193,..., 239 relative to the start of an SS/PBCH block.
- DMRS for PBCH:
   -- OFDM symbol number l = 1, 3 relative to the start of an SS/PBCH block, and subcarrier number k = 0+v, 4+v, 8+v,...,2 36+v relative to the start of an SS/PBCH block.
   -- OFDM symbol number l = 2 relative to the start of an SS/PBCH block, and subcarrier number k = 0+v, 4+v, 8+v,..., 44+v, 192+v, 196+v,..., 236+v relative to the start of an SS/PBCH block.

### (SSB Pattern: Physical layer procedures for control/Synchronization procedures/Cell search)

In a half-frame with a plurality of SS/PBCH blocks according to existing specifications, a first symbol indices for a plurality of candidate SS/PBCH blocks are determined as follows according to SCSs of the plurality of SS/PBCH blocks. Here, index 0 is the first symbol of the first slot in the half-frame.

- Case A - 15 kHz SCS: the first symbols of the plurality of candidate SS/PBCH blocks have indices in {2,8}+14·n.
   -- For operation without shared spectrum channel access,
      --- n = 0, 1 for a carrier frequency (FR1) of 3 GHz or lower.
      --- n = 0, 1, 2, 3 for a carrier frequency in FR1 higher than 3 GHz.
   -- For operation with shared spectrum channel access, n = 0, 1, 2, 3, 4.
- Case B - 30 kHz SCS: the first symbols of the plurality of candidate SS/PBCH blocks have indices in {4,8,16,20}+28·n. n = 0 for a carrier frequency (FR1) of 3 GHz or lower, and n = 0, 1 for a carrier frequency in FR1 higher than 3 GHz.
- Case C - 30 kHz SCS: the first symbols of the plurality of candidate SS/PBCH blocks have indices in {2,8}+14·n.
   -- In operation without shared spectrum channel access,
      --- For the paired spectrum operation (FDD), n = 0, 1 for a carrier frequency (FR1) of 3 GHz or lower, and n = 0, 1, 2, 3 for a carrier frequency in FR1 higher than 3 GHz. For operation with shared spectrum channel access, n = 0, 1, 2, 3, 4.
      --- For the unpaired spectrum operation (TDD), n = 0, 1 for a carrier frequency (FR1) lower than 1.88 GHz, and n = 0, 1, 2, 3 for a carrier frequency in FR1 of 1.88 GHz or higher.
   -- For operation with shared spectrum channel access, n = 0, 1, 2, 3, 4, 5, 6, 7, 8, 9.
- Case D - 120 kHz SCS: the first symbols of the plurality of candidate SS/PBCH blocks have indices in {4,8,16,20}+28·n. n = 0, 1, 2, 3, 5, 6, 7, 8, 10, 11, 12, 13, 15, 16, 17, 18 for a carrier frequency in FR2.
- Case E - 240 kHz SCS: the first symbols of the plurality of candidate SS/PBCH blocks have indices in {8,12,16,20,32,36,40,44}+56·n. n = 0, 1, 2, 3, 5, 6, 7, 8 for a carrier frequency in FR2-1.
- Case F - 480 kHz SCS: the first symbols of the plurality of candidate SS/PBCH blocks have indices in {2,9}+14·n. n = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31 for a carrier frequency in FR2-2.
- Case G - 960 kHz SCS: the first symbols of the plurality of candidate SS/PBCH blocks have indices in {2,9}+14·n. n = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31 for a carrier frequency in FR2-2.

In the plurality of cases above, when the SCS of the SS/PBCH block is not provided by ssbSubcarrierSpacing, an applicable case for a cell depends on the corresponding frequency band.

Indices 0 to L⁻ₘₐₓ-1 are assigned to the candidate SS/PBCH blocks in the half-frame in ascending order of time. L-^{m}ₐₓ is determined according to the SS/PBCH block patterns of Cases A to G. Lmₐₓ is the maximum number of SS/PBCH blocks in a cell, and the maximum number of SS/PBCH blocks transmitted in a half-frame is Lₘₐₓ.

### (NTN Coverage Enhancement)

DL coverage enhancement for a Rel. 18 NR non-terrestrial network (NTN) is being studied. For example, a case is being studied where transmission power from a satellite using a plurality of beams is insufficient due to restrictions on power flux density by the International Telecommunication Union (ITU). Further, enhancement of repetitions unique to NTN in addition to the technologies covered in Rel. 17 coverage enhancement for related channels is being studied.

For DL coverage enhancement, the lack of simulation results for SSB, Msg2, Msg4, PDSCH for 3 kbps, PDSCH for VoIP, PDCCH, and the like is being studied.

### (SSB Default Configuration)

In Rel. 17, an initial configuration for the UE is assumed as follows.
◇ For each serving cell, the UE can be provided, by ssb-periodicityServingCell, with a periodicity of a plurality of half-frames for receiving SS/PBCH blocks for the serving cell. When the UE is not configured with the periodicity of the plurality of half-frames for receiving the SS/PBCH blocks, the UE assumes a periodicity of one half-frame. The UE assumes that the periodicity is the same for all the SS/PBCH blocks in the serving cell.
◇ For initial cell selection, the UE may assume that a plurality of half-frames of a plurality of SS/PBCH blocks occur with a periodicity of two frames.
◇ For operation without shared spectrum channel access, SS/PBCH block indices are the same as candidate SS/PBCH block indices.
◇ Candidate values of ssb-periodicityServingCell include 5, 10, 20, 40, 80, and 160 [ms]. ssb-periodicityServingCell is an SSB periodicity in units of ms for rate matching. When the field is not present, the UE assumes 5.

### (PBCH Payload: Multiplexing and channel coding/Downlink transport channels and control information/Broadcast channel/PBCH payload generation)

A plurality of bits in a transport block delivered to Layer 1 are represented by a⁻_0, a⁻_1, a⁻_2, a⁻_3,..., a⁻ _A⁻-1. Here, A⁻ is a payload size generated by a higher layer. The lowest order (first) information bit a⁻_0 is mapped to the highest order bit (most significant bit, MSB) of the transport block.

PBCH payload bits regarding some of the following additional timings (information regarding the additional timings) are generated/provided.
◇ a⁻_A⁻, a⁻_A⁻+1, a⁻_A⁻+2, and a⁻_A⁻+3 are the fourth, third, second, and first least significant bits (LSBs) of the SFN, respectively.
◇ a⁻_A⁻+4 is the half-frame bit a⁻_HRF.
◇ When L⁻ₘₐₓ = 10, a⁻_A⁻+5, a⁻_A⁻+6, and a⁻_A⁻+7 are as follows.
   - ◇ a⁻_A⁻+5 is the MSB of k_SSB.
   - ◇ a⁻_A⁻+6 is reserved.
   - ◇ a⁻_A⁻+7 is the MSB of the candidate SS/PBCH block index.
◇ Otherwise, when L⁻ₘₐₓ = 20, a⁻_A⁻+5, a⁻_A⁻+6, and a⁻ _A⁻+7 are as follows.
   - ◇ a⁻_A⁻+5 is the MSB of k_SSB.
   - ◇ a⁻_A⁻+6 and a⁻_A⁻+7 are the fifth and fourth bits of the candidate SS/PBCH block index, respectively.
◇ Otherwise, when L⁻ₘₐₓ = 64, a⁻_A⁻+5, a⁻_A⁻+6, and a⁻ _A⁻+7 are as follows.
   - ◇ a⁻_A⁻+5, a⁻_A⁻+6, and a⁻_A⁻+7 are the sixth, fifth, and fourth bits of the candidate SS/PBCH block index, respectively.
◇ Otherwise, a⁻_A⁻+5, a⁻_A⁻+6, and a⁻_A⁻+7 are as follows.
   - ◇ a⁻_A⁻+5 is the MSB of k_SSB.
   - ◇ a⁻_A⁻+6 and a⁻_A⁻+7 are reserved.

### (Detection of Combination of SSBs)

In order to reduce the block error rate (BLER) in the SSB detection, the UE may detect a combination of a plurality of SSBs in one SSB, or may detect a combination of a plurality of SSBs across a plurality of SSB bursts.

A plurality of SSBs in 80 ms TTI of PBCH transmission have the same MIB payload and the same k_SSB parameter. The UE can detect the information using soft demodulation.

Variable information in the PBCH payload regarding timing includes the LSB of the SFN and the SSB index i_SSB. Whether to use the detection of a combination of SSBs using any method is left to the UE implementation.

### (Analysis)

In the coverage enhancement, the coverage enhancement of the SSB is not sufficiently studied. Unless the coverage enhancement of the SSB is sufficiently studied, there is a concern that the communication quality/throughput may deteriorate.

Accordingly, the present inventors conceived a method for the coverage enhancement of the SSB.

### (Various Interpretations and the like)

Hereinafter, embodiments according to the present disclosure will be described in detail with reference to the drawings. It is noted that each of the following embodiments (for example, each case) may be used independently, or may be applied by combining at least two of the embodiments.

In the present disclosure, "A/B" and "at least one of A or B" may be interchangeable with each other. Furthermore, in the present disclosure, "A/B/C" may mean "at least one of A, B, and C".

In the present disclosure, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, an information element (IE), a configuration, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be any of, for example, radio resource control (RRC) signaling, medium access control (MAC) signaling, broadcast information, and the like, or a combination thereof. In the present disclosure, RRC signaling, RRC IE, an RRC parameter, and a higher layer parameter may be interchangeable with each other.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, "has the capability of..." may be interchangeably used with "supports/reports the capability of...".

In the present disclosure, ceil(x) and the ceiling function may be interchangeably used with each other. In the present disclosure, floor(x) and the floor function may be interchangeably used with each other. In the present disclosure, sqrt(x) and the square root may be interchangeably used with each other. In the present disclosure, x mod y, mod(x,y), the mod function, and the modulo operation may be interchangeably used with each other. In the present disclosure, Σ_{i=M}^{N}f(i), the summation of f(i) over i = M, M+1,..., N, and f(M)+f(M+1)+...+f(N) may be interchangeably used with each other. C(n,k) may be interchangeably used with the number of combinations for selecting k values from n values (combinatorial coefficient), the binomial coefficients, ₙCₖ, and Cₙ^{k}.

In the present disclosure, a_{b}, a_b, and a notation in which b is attached to a at the lower right may be interchangeably used with each other. In the present disclosure, a^{c}, a^c, and a notation in which c is attached to a at the upper right may be interchangeably used with each other. In the present disclosure, a_{b}^{c}, a_b^c, and a notation in which b is attached to a at the lower right and c is attached to a at the upper right may be interchangeably used with each other. In the present disclosure, x^{~} may be expressed by attaching ~ over x, or may be referred to as x tilde. In the present disclosure, x⁻ may be expressed by attaching - over x, or may be referred to as x bar.

In the present disclosure, the frequency range corresponding to FR1 may be 410 to 7125 MHz. In the present disclosure, FR2 may include FR2-1 and FR2-2, the frequency range corresponding to FR2-1 may be 24250 to 52600 MHz, and the frequency range corresponding to FR2-2 may be 52600 to 71000 MHz.

In the present disclosure, the first symbol/slot/SSB and the starting symbol/slot/SSB may be interchangeably used with each other.

In the present disclosure, system information (SI), a part of system information, partial system information, MIB, SIB, SIB1, SIBx, a downlink shared channel carrying system information, and PDSCH carrying system information may be interchangeably used with each other.

In the present disclosure, a specific condition may include at least one condition of FR, a band (frequency band), a scenario, SSB SCS, PDCCH SCS, a SCS combination type, a SCS combination, a multiplexing pattern, and a relationship between SSB SCS and PDCCH SCS.

In the present disclosure, SCS, 15*2^{µ} kHz, SCS configuration, µ, and numerology may be interchangeably used with each other. In the present disclosure, SCS higher than 960 kHz and a µ higher than 6 may be interchangeably used with each other. In the present disclosure, reference SCS, µ_0, and µ_ref may be interchangeably used with each other. In the present disclosure, the first symbol and the starting symbol may be interchangeably used with each other. In the present disclosure, the symbol index, the symbol position, and the time position may be interchangeably used with each other. In the present disclosure, the SSB pattern, the SSB position pattern, the SSB starting symbol index, and the first symbol index of SSB may be interchangeably used with each other.

In the present disclosure, CORESET, CORESET #0, controlResourceSetZero, type 0-PDCCH, PDCCH scheduling SIB1 PDSCH, CORESET for PDCCH scheduling SIB1 PDSCH, CORESET for type 0-PDCCH, type 0-PDCCH monitoring occasion, type 0-PDCCH CSS set, CORESET for type 0-PDCCH CSS set, search space #0, searchSpaceZero, and CORESET for search space #0 may be interchangeably used with each other.

In the present disclosure, PDCCH SCS, CORESET SCS, and CORESET #0 SCS may be interchangeably used with each other.

In the present disclosure, a repetition number, a repetition factor, the number of repetitions, and K may be interchangeably used with each other.

In the present disclosure, a position, a time position, a starting symbol index, a time resource, a candidate SSB position, an SSB pattern, and a repetition pattern may be interchangeably used with each other.

In the present disclosure, a unit time, a period, a subframe, a slot, a half-frame, a frame, and a transmission time interval (TTI) may be interchangeably used with each other.

In the present disclosure, an SSB index, a candidate SSB index, a block index, a candidate SS/PBCH block index, a DL beam, a spatial domain receive filter, a TCI state, and a QCL assumption may be interchangeably used with each other. In the present disclosure, a candidate SSB #i and a candidate SSB having an SSB index i may be interchangeably used with each other.

In the present disclosure, a specific time, a specific duration, and a half-frame may be interchangeably used with each other.

In the present disclosure, a plurality of consecutive candidate SSBs, a plurality of consecutive candidate SSB resources, a plurality of candidate SSBs respectively having consecutive candidate SSB indices, a plurality of time resources for SSB, and a starting symbol index of SSB may be interchangeably used with each other. A plurality of time resources for SSB may be consecutive or may be non-consecutive.

In the present disclosure, an SSB burst and a plurality of candidate SSBs respectively corresponding to a plurality of different SSB indices may be interchangeably used with each other.

In the present disclosure, an original candidate SSB, a first candidate SSB, a periodic/regular candidate SSB, a standard/normal candidate SSB, a specific candidate SSB, and a specific SSB may be interchangeably used with each other. In the present disclosure, an SSB, a candidate SSB, an SSB candidate, and an SSB burst may be interchangeably used with each other. In the present disclosure, a repetition, a repeated SSB, a repeated SSB burst, a candidate SSB other than an original candidate SSB, and an SSB burst other than an original SSB burst may be interchangeably used with each other.

In the present disclosure, K repetitions of a candidate SSB and one original candidate SSB and (K-1) repetitions of the original candidate SSB may be interchangeably used with each other. In the present disclosure, a repeated candidate SSB, a repetition of an original candidate SSB, and a candidate SSB corresponding to an original candidate SSB may be interchangeably used with each other. In the present disclosure, a repetition of a candidate SSB, an original candidate SSB, and a repeated candidate SSB may be interchangeably used with each other.

In the present disclosure, K repetitions of an SSB burst, and one original SSB burst and (K-1) repetitions of the SSB burst ((K-1) repetition bursts) may be interchangeably used with each other. In the present disclosure, a repetition of an SSB burst, an original SSB burst, and a repeated SSB burst may be interchangeably used with each other.

In the present disclosure, a candidate SSB may indicate at least one of an original candidate SSB and a repeated candidate SSB. In the present disclosure, an SSB burst may indicate at least one of an original SSB burst and a repeated SSB burst.

In the present disclosure, an existing UE (specific terminal) may be a terminal that does not support SSB repetition. In the present disclosure, a new UE may be a terminal that supports SSB repetition. In the present disclosure, supporting SSB repetition and reporting capability information representing support of SSB repetition may be interchangeably used with each other.

In the present disclosure, an original candidate SSB may indicate a candidate SSB without repetition, may indicate a candidate SSB that is receivable by an existing UE, or may indicate a candidate SSB that is receivable by both an existing UE and a new UE. In the present disclosure, a repeated candidate SSB may indicate a repetition of an original candidate SSB, may indicate a candidate SSB that is not receivable by an existing UE, or may indicate a candidate SSB that is receivable by only a new UE.

In the present disclosure, an original SSB burst may indicate an SSB burst without repetition, may indicate an SSB burst that is receivable by an existing UE, or may indicate an SSB burst that is receivable by both an existing UE and a new UE. In the present disclosure, a repeated SSB burst may indicate a repetition of an original SSB burst, may indicate an SSB burst that is not receivable by an existing UE, or may indicate an SSB burst that is receivable by only a new UE.

### (Radio Communication Method)

### <Embodiment 1>

This embodiment relates to SSB repetition.

In a specific scenario, SSB repetition may be supported. The specific scenario may be, for example, an NTN scenario. In the present disclosure, SSB repetition may mean that an SSB related to one SSB index is transmitted multiple times at each transmission periodicity/each detection periodicity of SSB. In the present disclosure, an SSB may be any signal used for synchronization, but is not limited to an SSB.

### <<Embodiment 1-1>>

An SSB pattern (repetition pattern) with repetitions of an SSB may follow at least one of the following options.

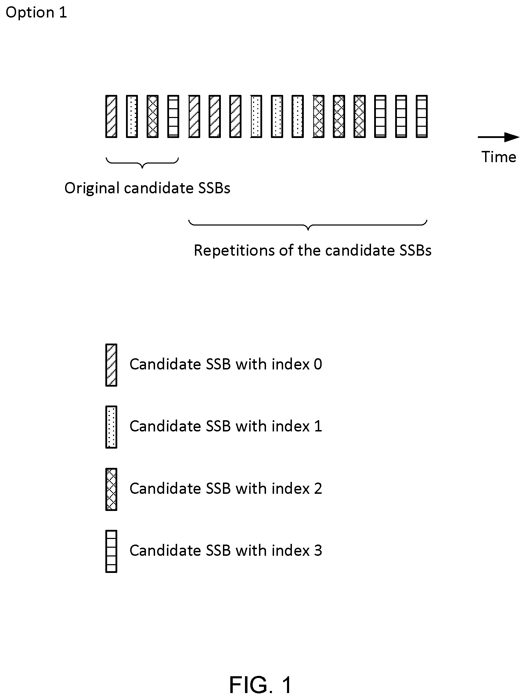

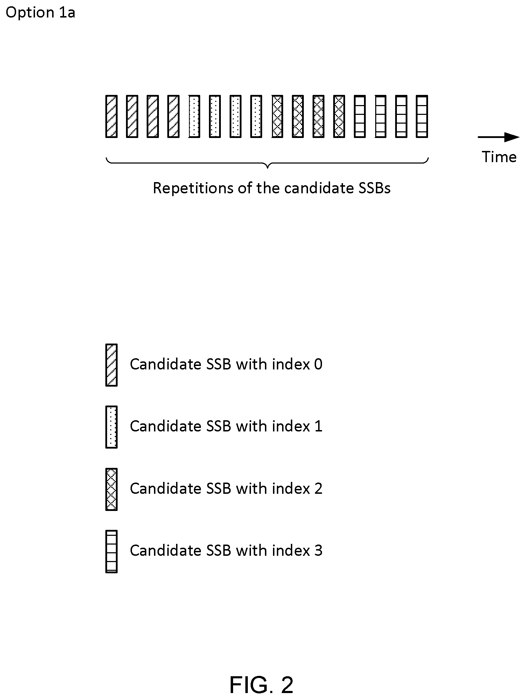

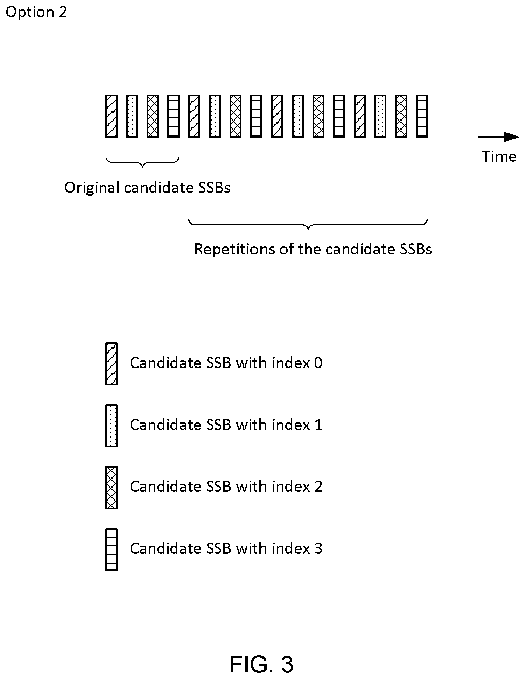

◇ Option 1: a plurality of consecutive candidate SSB resources may be used for a plurality of repetitions of the same candidate SSB. After one original candidate SSB is arranged/mapped, repetitions of the original candidate SSB (a plurality of repeated candidate SSBs corresponding to the original candidate SSB) may be sequentially arranged in/mapped to a plurality of consecutive candidate SSB resources. This option may follow at least one of the following features.
   - ◇ After N original candidate SSBs (original SSB bursts) respectively having N different candidate SSB indices are transmitted, the (K-1) repeated candidate SSBs corresponding to each original candidate SSB may be sequentially transmitted.
   - ◇ In the example of FIG. 1, the number N of candidate SSBs is 4, the four candidate SSB indices are 0, 1, 2, and 3, and the repetition number K is 4. In this example, after four original candidate SSBs are transmitted, a set including (K-1) repeated candidate SSBs with candidate SSB index 0, a set including (K-1) repeated candidate SSBs with candidate SSB index 1, a set including (K-1) repeated candidate SSBs with candidate SSB index 2, and a set including (K-1) repeated candidate SSBs with candidate SSB index 3 are transmitted in this order.
   - ◇ The order of the N sets may be different from the order of the candidate SSB indices, or may be different from the order of the original candidate SSBs. For example, the candidate SSB indices of the four sets may be 3, 2, 1, and 0, respectively, or may be, 3, 0,1, and 2, respectively.
   - ◇ The time from the start of the original candidate SSB to the start of the repeated candidate SSB may be a time offset of Embodiment 1-2 described below, or may be the repetition periodicity of Embodiment 1-2/Embodiment 1-3 described below.
   - ◇ The time from the start of repetitions of one candidate SSB (repeated candidate SSBs corresponding to one SSB index) to the start of repetitions of the next candidate SSB (repeated candidate SSBs corresponding to the next SSB index) may be the repetition periodicity of Embodiment 1-2/1-3 described below.
   - ◇ N original candidate SSBs and N sets of (K-1) repeated candidate SSBs may be transmitted at each detection periodicity. The detection periodicity may be the detection periodicity of Embodiment 1-3 described below.
◇ Option 1a: consecutive candidate SSB resources may be used for a plurality of repetitions of the same candidate SSB. A plurality of repetitions of one candidate SSB may be sequentially arranged in/mapped to a plurality of consecutive candidate SSB resources. This option may follow at least one of the following features.
   - ◇ For each candidate SSB index, K repetitions of a candidate SSB may be consecutively transmitted.
   - ◇ In the example of FIG. 2, the number N of candidate SSBs is 4, the four candidate SSB indices are 0, 1, 2, and 3, and the repetition number K is 4. In this example, a set including K repetitions of a candidate SSB with candidate SSB index 0, a set including K repetitions of a candidate SSB with candidate SSB index 1, a set including K repetitions of a candidate SSB with candidate SSB index 2, and a set including K repetitions of a candidate SSB with candidate SSB index 3 are transmitted in this order.
   - ◇ The order of the N sets may be different from the order of the corresponding candidate SSB indices. For example, four candidate SSB indices corresponding to the four sets may be 3, 2, 1, and 0, respectively, or may be 3, 0, 1, and 2, respectively, in time order.
   - ◇ The time from the start of repetitions of one candidate SSB (repetition corresponding to one SSB index) to the start of repetitions of the next candidate SSB (repetition corresponding to the next SSB index) may be the repetition periodicity of Embodiment 1-2/1-3 described below.
   - ◇ N sets of K repetitions may be transmitted at each detection periodicity. The detection periodicity may be the detection periodicity of Embodiment 1-3 described below.
◇ Option 2: a plurality of consecutive candidate SSB resources may be used for a plurality of repetitions of a plurality of different candidate SSBs. Repetitions of an SSB burst including a plurality of different candidate SSBs may be sequentially arranged in/mapped to a plurality of consecutive candidate SSB resources. This option may follow at least one of the following features.
   - ◇ One SSB burst may include N candidate SSBs, and K repetitions (K SSB bursts) of the SSB burst may be transmitted. The N candidate SSBs in the SSB burst may have N different candidate SSB indices, respectively. The first SSB burst among the K SSB bursts may consist of N original candidate SSBs (original SSB burst). SSB bursts other than the first SSB burst among the K SSB bursts may be (K-1) repetitions (repeated SSB bursts) of the original SSB burst. This option may follow at least one of the following features.
   - ◇ In the example of FIG. 3, the number N of candidate SSBs is 4, the four candidate SSB indices are 0, 1, 2, and 3, and the repetition number K is 4. In this example, N original candidate SSBs (original SSB bursts) respectively corresponding to candidate SSB indices 0, 1, 2, and 3 are transmitted, and subsequently (K-1) repeated SSB bursts are transmitted.
   - ◇ The order of the candidate SSBs in each SSB burst may be different from the order of the candidate SSB indices. For example, four candidate SSB indices corresponding to the four candidate SSBs in each SSB burst may be 3, 2, 1, and 0, or may be 3, 0, 1, and 2 in this order.
   - ◇ The time from the start of one repetition of the SSB burst to the start of the next repetition may be the repetition periodicity of Embodiment 1-2/1-3 described below.
   - ◇ K repetitions of the SSB burst may be transmitted at each detection periodicity. The detection periodicity may be the detection periodicity of Embodiment 1-3 described below.

The SSB pattern (repetition pattern) with repetitions of an SSB may be defined in the specifications.

K repetitions of a candidate SSB may consist of one original candidate SSB and (K-1) repeated candidate SSBs corresponding to the original candidate SSB. K repetitions of an SSB burst may consist of one original SSB burst and (K-1) repeated SSB bursts corresponding to the original SSB burst.

Option 1/2 may be applied to the enhancement of the existing specifications (for example, 5G NR). The time position of the original candidate SSB may be determined by diversion/reuse of the time position of the candidate SSB in NR. A plurality of repeated candidate SSBs may be transmitted after the corresponding original candidate SSB.

Option 1a may be applied to the new specification (for example, 6G or later).

In a UE having no capability of detecting a repeated SSB burst, only an original SSB burst may be detected. When the UE attempts to detect the repeated SSB burst, it is assumed that the UE fails to decode of the PBCH in the repeated SSB bursts. In a UE having the capability of detecting a repeated SSB burst, one or both of an original SSB burst and a repeated SSB burst corresponding thereto can be detected.

### <<Embodiment 1-2>>

Positions of repetitions (repetition positions) of a candidate SSB may follow at least one of the following alternatives.

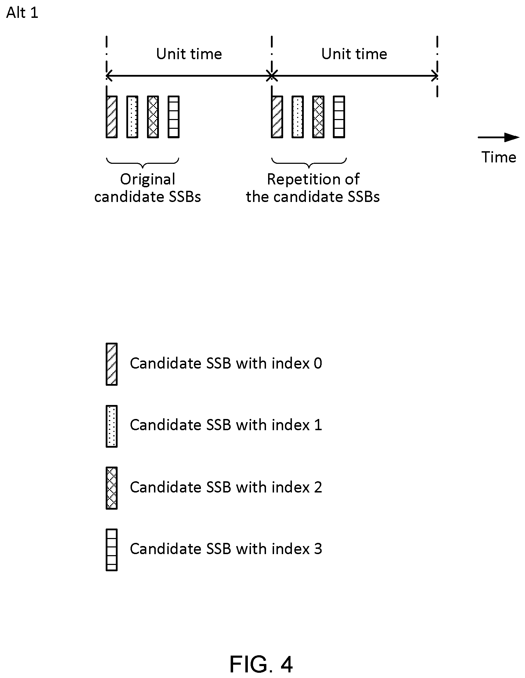

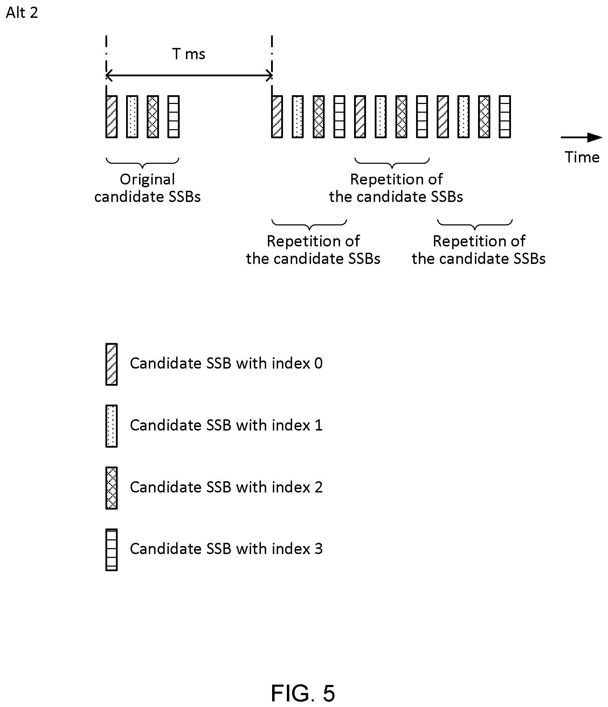

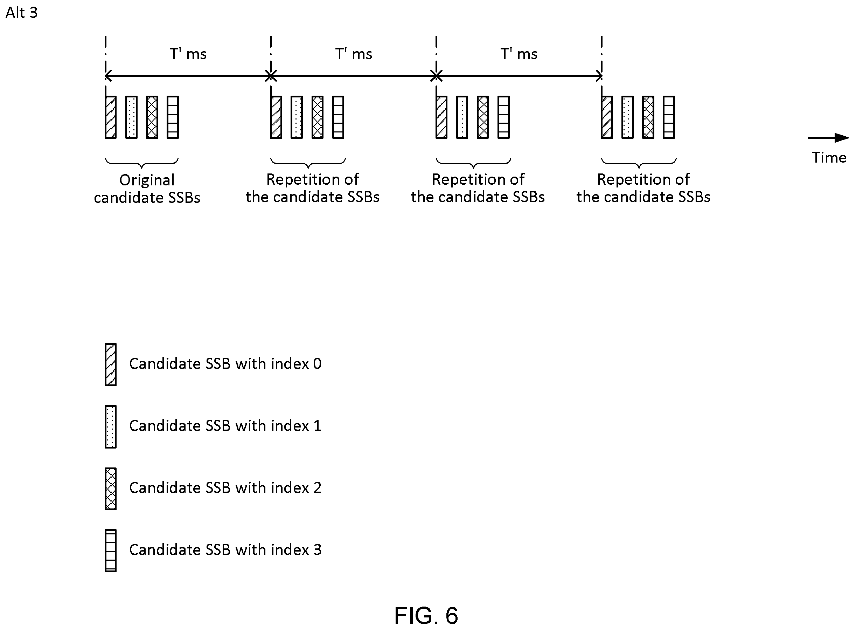

◇ Alternative 1: in a unit time subsequent to a unit time in which transmission of the last original candidate SSB (in an SSB burst) is started, transmission of repeated candidate SSBs (repetitions of the SSB burst) may be started. In the example of FIG. 4, the unit time is a subframe, and the number N of candidate SSBs is 4. In subframe 0, transmission of the last original candidate SSB in an SSB burst including N original candidate SSBs is started, and transmission of the corresponding repeated SSB burst is started in the next subframe 1. In a unit time subsequent to a unit time in which transmission of the last original candidate SSB (in an SSB burst) is started, transmission of a plurality of repetitions of the candidate SSB may be started. In a unit time subsequent to a unit time in which transmission of the original SSB burst is ended, transmission of the corresponding repeated SSB burst may be started. The original SSB burst/repeated SSB burst may be started at each repetition periodicity. The repetition periodicity may follow Embodiment 1-3 described below.
◇ Alternative 2: the corresponding repeated candidate SSB may be started after a time offset (gap) from the start of the original candidate SSB. The time offset may be T ms. T may be defined in the specifications. T may be 5, 10,... or the like. In the example of FIG. 5, the number N of candidate SSBs is 4. Transmission of an original SSB burst including N original candidate SSBs is started, and after the time offset T ms from the start of the original SSB burst, transmission of (K-1) repeated SSB bursts corresponding to the original SSB burst is started. According to this alternative, the repeated candidate SSB/repeated SSB burst can be flexibly arranged relative to the original candidate SSB/original SSB burst. The time offset may be defined for a specific scenario/specific FR/specific band. In the NTN scenario, the time offset may depend on the position/orbit of a satellite. Regarding the time offset between repetitions in a repeated candidate SSB, the method related to the above-described time offset may be applied, and the value of the time offset may be different among different repetitions.
◇ Alternative 3: Each repetition (original candidate SSB/repeated candidate SSB/original SSB burst/repeated SSB burst) may be started at each repetition periodicity (time interval). The repetition periodicity may be the time from the start of a repetition to the start of the next repetition. The repetition periodicity may be T' ms. T' may be defined in the specifications. T' may be 5, 10,... or the like. In the example of FIG. 6, the number N of candidate SSBs is 4. Transmission of an original SSB burst including N original candidate SSBs is started, and at each repetition periodicity T' ms from the start of transmission of the original SSB burst, transmission of the corresponding repeated SSB burst corresponding to the original SSB burst is started.

Positions of repetitions of a candidate SSB may be defined in the specifications.

The position of the first symbol of each candidate SSB for repetition may be defined in the specifications.

Positions of repetitions of a candidate SSB may be defined with reference to the position of the original candidate SSB, or may be defined as an offset from the position of the original candidate SSB.

Positions of repetitions of a candidate SSB may be defined with reference to the first symbol of the first slot of a specific time including an original candidate SSB, or may be defined as an offset from the first symbol of the first slot of a specific time including an original candidate SSB.

### <<Embodiment 1-3>>

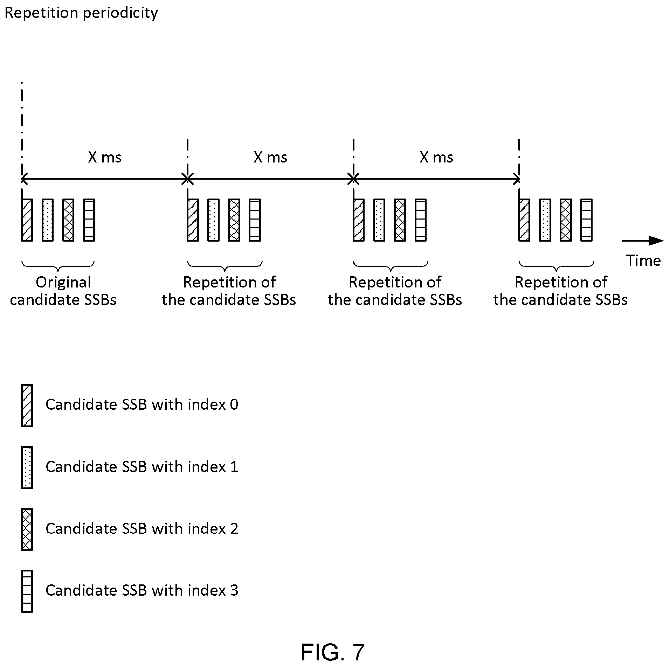

The repetition periodicity of a candidate SSB/SSB burst for a specific scenario/specific FR/specific band or the like may be defined as X ms in the specifications, or may be defined as the repetition periodicity T' ms in Alternative 3 of the repetition position. The specific scenario/specific FR/specific band may be, for example, a scenario/frequency/band for NTN. X may be 5, 10, 15,... or the like. The repetition periodicity may be the time from the start of an original candidate SSB to the start of a repetition of the candidate SSB, or may be the time from the start of a repetition of a candidate SSB to the start of the next repetition of the candidate SSB. In the example of FIG. 7, the number N of candidate SSBs is 4. The repetition periodicity of an SSB burst including four candidate SSBs is X ms.

The default value of the detection periodicity of a candidate SSB by a UE in a specific scenario/specific FR/specific band may be defined as Y ms in the specifications. Y may be 5, 10, 15, 20, 30, 40... or the like. The detection periodicity may be the time from the start of an original candidate SSB to the next start of the original candidate SSB, or may be the time from the start of K repetitions of a candidate SSB to the start of the next K repetitions of the candidate SSB after the end of the K repetitions.

The default value of the detection periodicity of an SSB by an existing UE is 20 [ms]. Y may be less than the existing default value (for example, any one of 5, 10, and 15). Y may be more than the existing default value (for example, any one of 30 or 40).

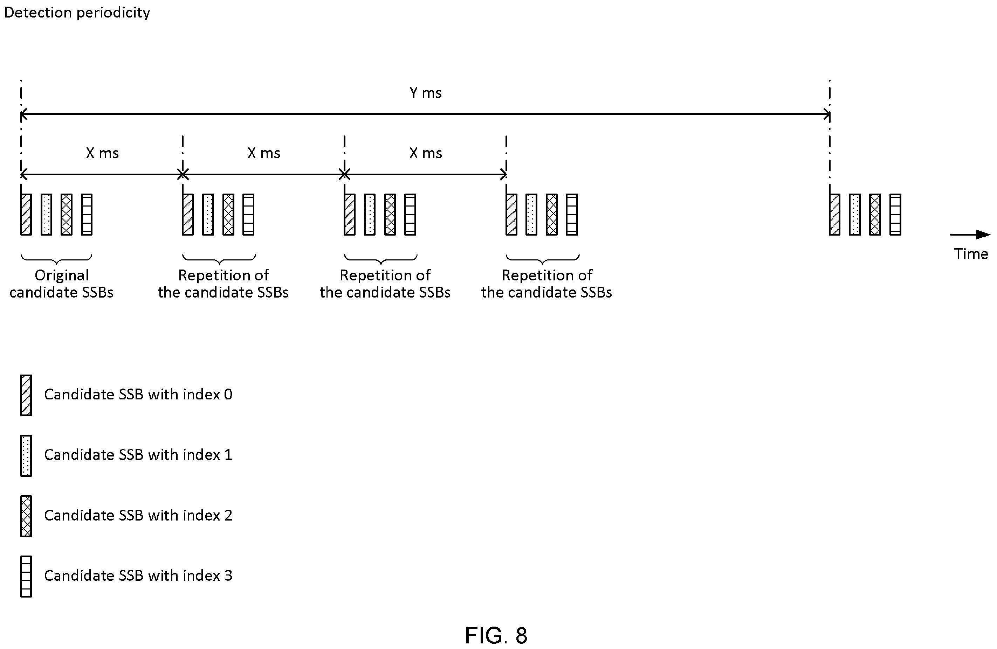

In the example of FIG. 8, the number of candidate SSBs is 4, and the repetition number K is 4. The repetition periodicity of an SSB burst including N candidate SSBs is X ms. The detection periodicity is Y ms. K repetitions of the SSB burst may be transmitted at each detection periodicity.

When a smaller detection periodicity is used, analysis of a larger number of SSBs to be combined in one TTI can be supported, and the existing SSB pattern can be maintained while accelerating a PBCH detection process. The UE can detect SSBs more frequently so as to achieve the purpose of repetition.

When a larger detection periodicity is used, there is no large influence on the arrangement of other resources. When a larger repetition periodicity/detection periodicity is used, time resources within the periodicity may be distributed to a plurality of operators in site sharing, or may be used for beam switching for analog beam sweeping.

The repetition periodicity/detection periodicity may be applied to the existing SSB pattern, or may be applied to a SSB pattern newly defined with the repetition.

### <<Embodiment 1-4>>

Regarding SSB repetition, at least one of the following parameters may be introduced.

### ◇ Repetition Number

The number of repetitions (repetition number K) of a candidate SSB may be defined in the specifications. The repetition number may be, for example, repetitionNum or nrofRepetitions. The range of values of the repetition number may include, for example, at least one of {1,2,3,4,...}. Whether SSB repetition is performed in a specific scenario/specific FR/specific band may be defined in the specifications. The repetition number in a specific scenario/specific FR/specific band may be defined in the specifications.

### ◇ Repetition Index

A new information element (repetition index) for counting repetition indices may be defined in the specifications. The repetition index may be, for example, repetitionId-19 or repetitionId. The repetition index may indicate that a candidate SSB is a k-th repetition. The range of values of the repetition index may be {0,1,...,repetitionNum-1}. Repetition index = 0 may mean that repetition is not performed. Based on repetitions of a candidate SSB, the UE may determine a repetition index of the repetition. The repetition index may be notified by at least one of a PSS, an SSS, a MIB (PBCH), and a PBCH DMRS. A sequence/sequence number of at least one of a PSS, an SSS, and a PBCH DMRS may be associated with the repetition index. For example, the repetition index may be carried by a PBCH DMRS pattern, or may be carried by a PBCH DMRS sequence. The repetition index can be used to assist in determining positions of repetitions of a candidate SSB. The UE may detect/determine the repetition index based on at least one of a PSS, an SSS, and a PBCH DMRS in one repetition of a candidate SSB.

### ◇ Information of SFN/Half-Frame (SFN Information/Half-Frame Indication)

Information of SFN/half-frame may follow at least one of the following options.

- ◇ Option 1: Information of the SFN/half-frame of a corresponding original candidate SSB is carried in a plurality of repetitions of the candidate SSB. The same information of the SFN/half-frame may be carried in all repetitions of the same candidate SSB.
- ◇ Option 2: Each repetition of a candidate SSB carries information of the SFN/half-frame of the repetition. Information of the SFN/half-frame to be carried may differ between a plurality of repetitions of the same candidate SSB.

### ◇ SSB Index

The SSB index may follow at least one of the following alternatives.

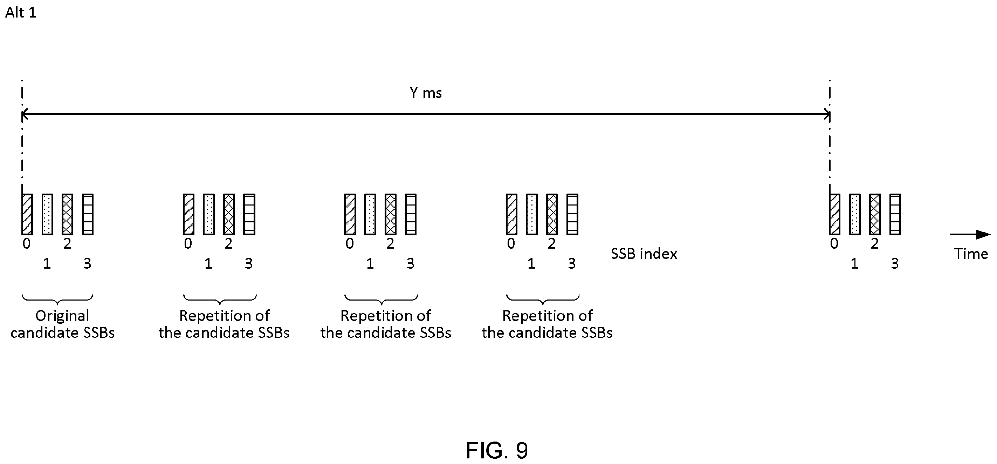

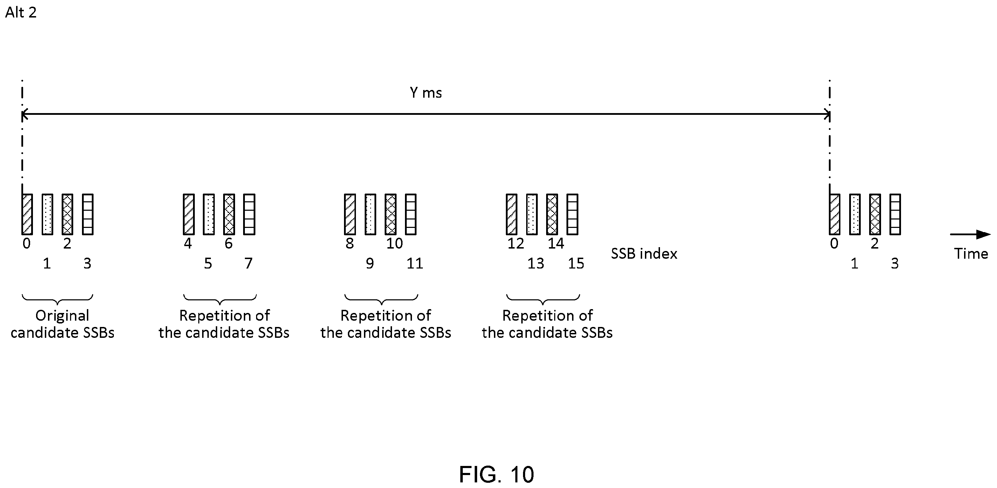

- ◇ Alternative 1: each candidate SSB has K repetitions. All repetitions of one candidate SSB have the same SSB index. In the example of FIG. 9, the number N of candidate SSBs in one SSB burst is 4, and the repetition number K is 4. N candidate SSBs in one SSB burst have N different SSB indices 0, 1, 2, and 3, respectively. The N candidate SSBs in each repetition of the SSB burst have N different SSB indices 0, 1, 2, and 3, respectively.
- ◇ Alternative 2: each candidate SSB has K repetitions. All repetitions of one candidate SSB have the different SSB indices. In the example of FIG. 10, the number N of candidate SSBs in one SSB burst is 4, and the repetition number K is 4. K × N candidate SSBs in K SSB bursts have K × N different SSB indices 0, 1,..., and 15, respectively.
- ◇ Alternative a: regarding Alternative 1/2, the UE may follow at least one of the following procedures.
   --◇ The UE may receive one or more candidate SSBs (original candidate SSBs/repeated candidate SSBs), and may determine an SSB index corresponding to the candidate SSBs based on the one or more candidate SSBs. When the UE receives a plurality of candidate SSBs respectively corresponding to a plurality of SSB indices, the UE may determine one SSB index corresponding to the best candidate SSB among the plurality of SSB indices based on received power of the plurality of candidate SSBs. The UE may perform a random access procedure using a random access resource (random access channel (RACH) resource) corresponding to the determined SSB index.
   --◇ In Alternative 1/2, the UE may detect/determine an SSB index used for the random access procedure (determination of the RACH resource) from one candidate SSB among one or more detected/received candidate SSBs (original candidate SSBs/repeated candidate SSBs). The UE may detect/determine an SSB index used for the random access procedure based on received power of each candidate SSB.
   --◇ In Alternative 1, the UE may detect/determine an SSB index for the random access procedure from one or more candidate SSBs having the same SSB index among one or more detected/received candidate SSBs (original candidate SSBs/repeated candidate SSBs). The UE may detect/determine an SSB index for the random access procedure based on received power of each SSB index. By combining the received power of one or more candidate SSBs having the same SSB index, the UE may measure/determine the received power corresponding to the SSB index. Using the first or the last received power among one or more candidate SSBs having the same SSB index, the UE may measure/determine the received power corresponding to the SSB index.

### ◇ Pattern Information

Pattern information may indicate a pattern of SSBs/repetitions. The pattern information may indicate at least one of a repetition pattern (Option 1/1a/2), a repetition position (Alternative 1/2/3), a repetition periodicity, and a detection periodicity. The pattern information may be notified by at least one of a PSS, an SSS, a MIB (PBCH), and a PBCH DMRS.

### ◇ Sequence of PSS/SSS

In order to avoid detection of repeated candidate SSBs by a UE that does not support SSB repetition, a new sequence of PSS/SSS for the repeated candidate SSBs may be designed. In this case, the UE can determine whether the received SSB is a repeated candidate SSB or an original candidate SSB before PBCH decoding.

Information carried by repetitions of an SSB may be different from information carried by an original candidate SSB. For example, at least one of the information of SFN/half-frame, the SSB index, and the sequence of PSS/SSS may differ between the information carried by the original candidate SSB and the information carried by the repetitions of the SSB. For example, at least one of the repetition number and the repetition index may not be carried by the original candidate SSB, but may be carried by the repetitions of the SSB.

Central frequencies of a plurality of repetitions of an SSB may be the same as or different from each other (frequency hopping may be applied to the plurality of repetitions). In other words, the central frequencies of the plurality of repetitions of the SSB may be located on one synchronization raster or on a plurality of synchronization rasters.

According to this embodiment, SSB coverage can be enhanced.

### <Mandatory Function/Optional Function>

At least one of the functions in the above-described embodiments may be a mandatory function of the UE in a specific radio communication system (RAT, for example, 6G or later). The UE may be configured with/indicated for the function or may perform the function without reporting a UE capability related to the function (mandatory without capability signalling). The UE may be required to report the UE capability related to the function (mandatory with capability signalling).

At least one of the functions in the above-described embodiments may be an optional function of the UE in a specific radio communication system (RAT, for example, 5G NR). A UE that supports the function may report a UE capability related to the function.

### <Supplement>

### [Notification of Information to UE]

Notification of any information (from the network (NW)) (for example, the base station (BS)] to the UE (in other words, reception of any information from the BS by the UE) in the above-described embodiments may be performed using physical layer signaling (for example, DCI), higher layer signaling (for example, RRC signaling, a MAC CE), a specific signal/channel (for example, a PDCCH, a PDSCH, or a reference signal), or a combination thereof.

When the notification is performed by a MAC CE, the MAC CE may be identified by including, in a MAC subheader, a new logical channel ID (LCID) not defined in existing standards.

When the notification is performed using DCI, the notification may be performed by a specific field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a specific signal/channel (for example, a PUCCH, a PUSCH, a PRACH, or a reference signal), or a combination thereof.

When the notification is performed by a MAC CE, the MAC CE may be identified by including, in a MAC subheader, an LCID not defined in existing standards.

When the notification is performed by a UCI, the notification may be transmitted using a PUCCH or PUSCH.

In addition, the notification of any information from the UE in the above-described embodiments may be performed periodically, semi-persistently, or aperiodically.

### [About Application of Each Embodiment]

At least one of the above-described embodiments may be applied when a specific condition is satisfied. The specific condition may be defined in the standards, or may be notified to the UE/BS using higher layer signaling/physical layer signaling.

The specific condition may indicate at least one of the following:
◇ Specific Scenario. The specific scenario may be any NTN scenario or a specific NTN scenario. The specific NTN scenario may be a specific NTN type or a specific satellite type.
◇Specific FR.
◇Specific band.

At least one of the above-described embodiments may be applied only to a UE that has reported a specific UE capability or supports the specific UE capability.

The specific UE capability may indicate at least one of the following:
◇ supporting specific processing/operation/control/information about at least one of the above-described embodiments;
◇ the UE supporting SSB repetition;
◇ the UE supporting SSB repetition in the specific scenario;
◇ the UE supporting SSB repetition in the specific FR; and
◇ the UE supporting SSB repetition in the specific band.

In addition, the specific UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Component-carrier (FSPC).

In addition, the specific UE capability may be capability applied across all the duplex schemes (in common irrespective of duplex scheme) or may be capability for each duplex scheme (for example, time division duplex (TDD) and frequency division duplex (FDD)).

In addition, the specific UE capability may be defined as a mandatory function without UE capability signaling, or may be defined as a mandatory function with UE capability signaling. In addition, the specific UE capability may be defined as an optional (selectable) function without UE capability signaling, or may be defined as an optional function with UE capability signaling.

In addition, at least one of the above-described embodiments may be applied when the UE is configured/activated/triggered with specific information related to the above-described embodiment (or to perform the operation of the above-described embodiment) by higher layer signaling/physical layer signaling. The specific information may indicate at least one of the following:
◇ information indicating activation/deactivation of the operation of the above-described embodiments;
◇ RRC parameter for a specific release (for example, Rel. 18/19). The RRC parameter may have a name in which "r18"/"r19" is attached to the name of an existing RRC parameter.

The UE may apply, for example, the operation of a release prior to the specific release when the UE does not support at least one of the specific UE capabilities or is not configured with the specific information.

### (Supplementary Notes)

Regarding one embodiment of the present disclosure, the following supplementary notes of the invention will be given.

### [Supplementary Note 1]

A terminal including
a receiving section that receives one or more repetitions among a plurality of repetitions of a synchronization signal block; and
a control section that determines at least one of a repetition index and a synchronization signal block index based on the one or more repetitions.

### [Supplementary Note 2]

The terminal according to Supplementary Note 1, in which
the plurality of repetitions are sequentially arranged in a plurality of time resources.

### [Supplementary Note 3]

The terminal according to Supplementary Note 1 or 2, in which
a plurality of synchronization signal blocks respectively corresponding to a plurality of synchronization signal block indices are sequentially arranged in a plurality of time resources.

### [Supplementary Note 4]

The terminal according to any one of Supplementary Notes 1 to 3, in which the plurality of repetitions include the synchronization signal block that is receivable by a specific terminal not supporting the plurality of repetitions, and one or more synchronization signal blocks that are not receivable by the specific terminal.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

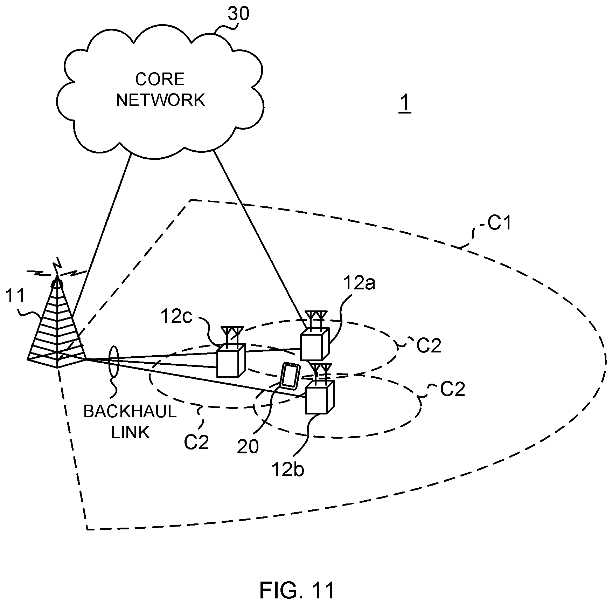

FIG. 11 is a diagram illustrating an example of a schematic configuration of a radio communication system according to one embodiment. A radio communication system 1 (simply referred to as the system 1) may be a system that implements communication using long term evolution (LTE), 5th generation mobile communication system New Radio (5G NR), and the like defined by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations 10 may be connected to each other in a wired manner (for example, an optical fiber in compliance with common public radio interface (CPRI), an X2 interface, or the like) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor a CORESET associated with a given Search Space based on a Search Space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

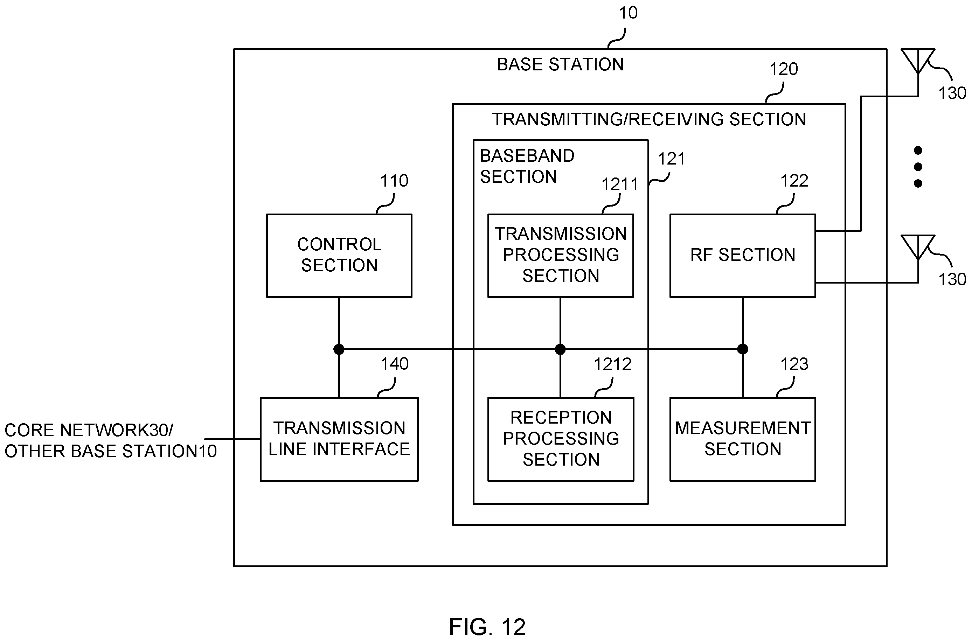

FIG. 12 is a diagram illustrating an example of a configuration of a base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described based on common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

The control section 110 may include a signal indicating at least one of a repetition index and a synchronization signal block index in one or more repetitions among a plurality of repetitions of a synchronization signal block (for example, an SSB). The transmitting/receiving section 120 may transmit the plurality of repetitions.

### (User Terminal)

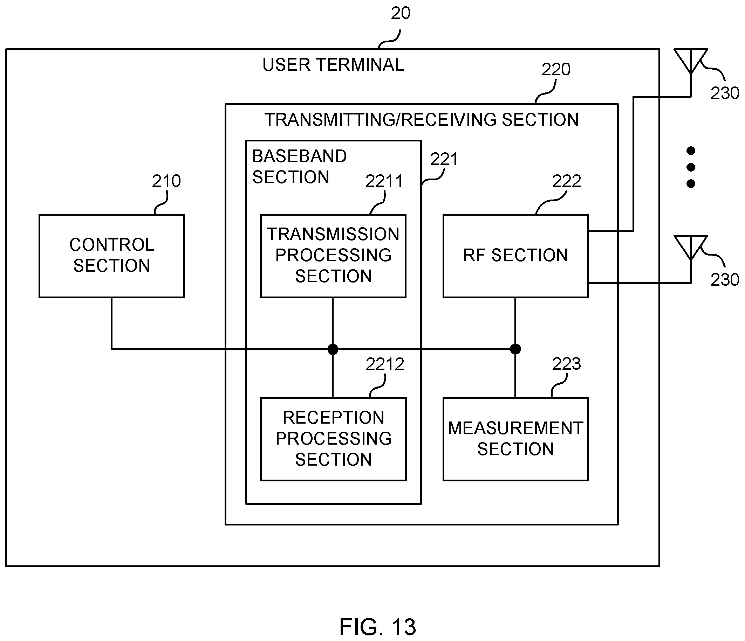

FIG. 13 is a diagram illustrating an example of a configuration of a user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and otherwise, DFT processing does not have to be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeably used with a zero power (ZP) CSI-RS. Note that, in the present disclosure, CSI-RS, NZP CSI-RS, ZP CSI-RS, CSI-IM, CSI-SSB, and the like may be interchangeably used with each other.

It is noted that the transmitting section and the receiving section of the user terminal 20 in the present disclosure may include at least one of the transmitting/receiving section 220 and the transmitting/receiving antenna 230.

The transmitting/receiving section 220 may receive one or more repetitions among a plurality of repetitions of a synchronization signal block (for example, K repetitions of a candidate SSB, or one original candidate SSB and (K-1) repeated candidate SSBs). The control section 210 may determine at least one of a repetition index and a synchronization signal block index (for example, an SSB index) based on the one or more repetitions.

The plurality of repetitions may be sequentially arranged in a plurality of time resources (for example, candidate SSB positions).

A plurality of synchronization signal blocks respectively corresponding to a plurality of synchronization signal block indices may be sequentially arranged in a plurality of time resources.

The plurality of repetitions may include the synchronization signal block (for example, the original candidate SSB) that is receivable by a specific terminal (for example, an existing UE) not supporting the plurality of repetitions, and one or more synchronization signal blocks (for example, repeated candidate SSBs) that are not receivable by the specific terminal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

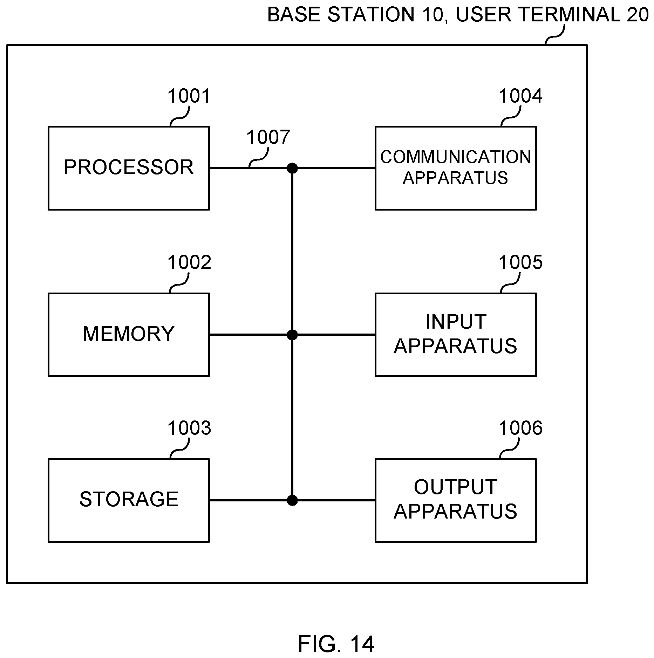

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

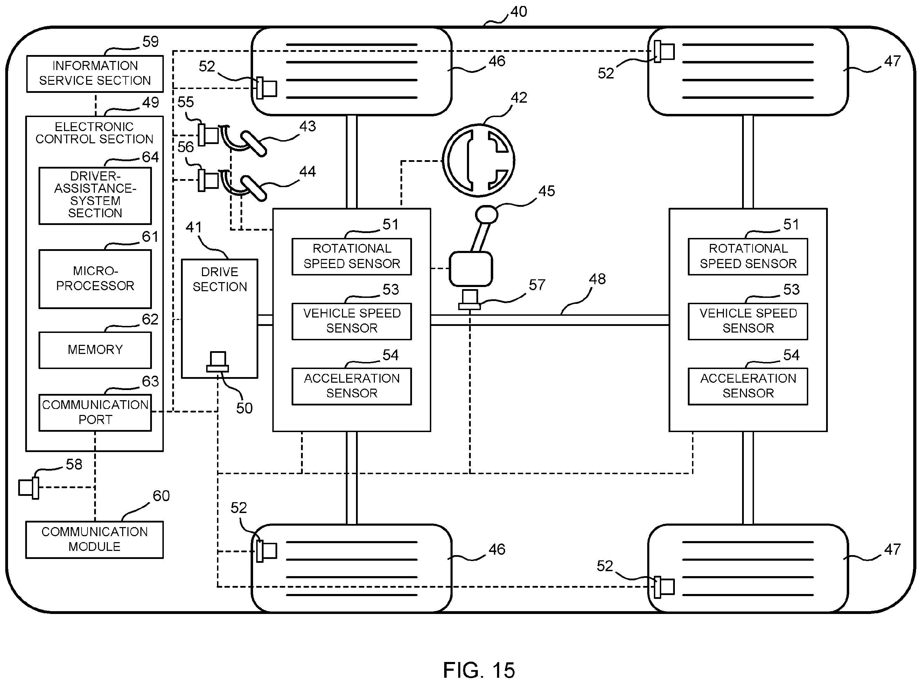

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives one or more repetitions among a plurality of repetitions of a synchronization signal block; and
a control section that determines at least one of a repetition index and a synchronization signal block index based on the one or more repetitions.

2. The terminal according to claim 1, wherein the plurality of repetitions are sequentially arranged in a plurality of time resources.

3. The terminal according to claim 1, wherein a plurality of synchronization signal blocks respectively corresponding to a plurality of synchronization signal block indices are sequentially arranged in a plurality of time resources.

4. The terminal according to claim 1, wherein the plurality of repetitions include the synchronization signal block that is receivable by a specific terminal not supporting the plurality of repetitions, and one or more synchronization signal blocks that are not receivable by the specific terminal.

5. A radio communication method for a terminal, the method comprising:
a step of receiving one or more repetitions among a plurality of repetitions of a synchronization signal block; and
a step of determining at least one of a repetition index and a synchronization signal block index based on the one or more repetitions.

6. A base station comprising:
a control section that includes a signal indicating at least one of a repetition index and a synchronization signal block index in one or more repetitions among a plurality of repetitions of a synchronization signal block; and
a transmitting section that transmits the plurality of repetitions.
